# EUROPEAN PATENT APPLICATION

(11) **EP 1 150 507 A2**
(43) Date of publication of application: **31.10.2001**
(21) Application number: 01302415.3
(22) Date of filing: 15.03.2001
(51) Int. Cl.: H04N 7/173

(54) **OSD System**

(30) Priority: 24.04.2000 KR 2000021557
(71) Applicant: SAMSUNG ELECTRONICS CO., LTD., Suwon-City, Kyungki-do (KR)
(72) Inventor: Lee, Sung Lyong, Kangnam-Ku, Seoul (KR)
(74) Representative: Geary, Stuart Lloyd

(57) **Abstract**

In order to reduce the OSD data traffic between a first apparatus (100) and a second apparatus (300), providing an OSD service for the first apparatus (100), cursor form data is cached at the second apparatus (300) so that, after an initial transmission of cursor form and location data, the first apparatus (100) only needs to send cursor location updates to the second apparatus (300).

## Description

The present invention relates to an apparatus configured to transmit OSD cursor data to a display apparatus and to display apparatus having an OSD function, the display apparatus including means for receiving OSD cursor data from an OSD data source apparatus.

Digital televisions (DTV) can display images according to digital television image signals received using its own tuner and image information from various other sources. For example, a DTV may be provided with a television signal from a satellite using a satellite broadcast receiver, commonly called a "set top box" (STB), or a cable converter, an image signal reproduced from a digital video disc (DVD) player, and an image signal reproduced from a digital video tape recorder DVCR through an IEEE 1394 bus. The DTV 1394 interface standard is specified in the EIA-775 standard series. In this standard, a source providing an image signal is termed a "producer" and an apparatus receiving and displaying an image signal, such as a DTV is termed a "consumer". In the DTV 1394 standard, an image signal is provided to a consumer in an MPEG transport stream and OSD data is provided to a consumer in a bitmap format. Also, a producer and a consumer exchange a control signal and a state signal.

Commonly, both producers and consumers are controlled using respective remote controllers. During control of a consumer, the user is provided with feedback by means of on-screen display (OSD) of information. Since producers do not normally have their own displays, feedback during setting of the producer is provided by OSD of information on the screen of the consumer, e.g. a DTV.

If there is a large amount of OSD data to be transferred from the producer to the consumer, the displayed image can be adversely affected.

An apparatus according to the present invention is characterised by being configured to send initially cursor data defining both the form of and a screen location for a cursor and thereafter send cursor data comprising location update data for said cursor without form data.

Preferably, such an apparatus is configured such that an id for said cursor is included in all cursor data sent for said cursor.

Preferably, said form data comprises a bit map.

A display apparatus according to the present invention is characterised by memory means for storing OSD cursor form data, received from an OSD data source apparatus, and means for reading cursor form data from the memory means for display in response to the reception of cursor location update data from an OSD data source apparatus that has previously supplied cursor form data.

Preferably, the means for reading cursor form data is responsive to an id accompanying cursor location update data for selecting cursor form data in said memory means.

Preferably, the cursor form data comprises bit maps.

An embodiment of the present invention will now be described, by way of example, withe reference to the accompanying drawings, in which;
Figure 1 shows an OSD image display apparatus according to the present invention;
Figure 2 is a circuit diagram illustrating the operation of Figure 1;
Figure 3 shows the data structure of an output asynchronous plug register of a producer according to the present invention;
Figure 4 shows a sub frame structure of an initial OSD cursor display data the present invention; and
Figure 5 is a draw showing an OSD cursor ID sub frame structure as transmitted from a producer to a consumer according to the present invention.

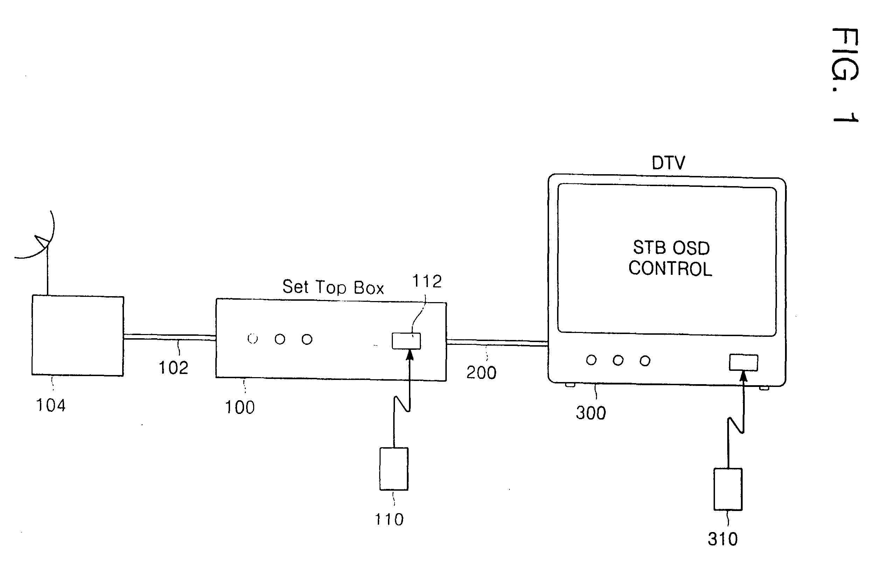

Referring to Figure 1, a set top box 100 and a producer receive a digital satellite broadcast signal form a satellite by means of a satellite antenna 104 connected by a coaxial cable 102. The set top box 100 detects an MPEG transport stream from the received satellite broadcast signal and then provides the detected MPEG transport stream to a DTV 300 through a DTV 1394 bus 200.

The set top box 100 recieves commands, generated by a remote controller 110, through a remote controller receiving part 112. Corresponding OSD data is generated in response to the input commands and is provided to the DTV 300 through the DTV 1394 bus 200.

The DTV 300 recovers an image signal by decoding the received MPEG transport stream by means of an MPEG decoder. The image signal and received OSD data are combined and displayed on the screen of the DTV 300. Therefore, a user can control a STB 100, using a remoter controller therefor, by viewing feedback presented by means of an OSD screen of the STB displayed on the screen of the DTV.

The DTV 300 is controlled by means of a DTV remote controller 310.

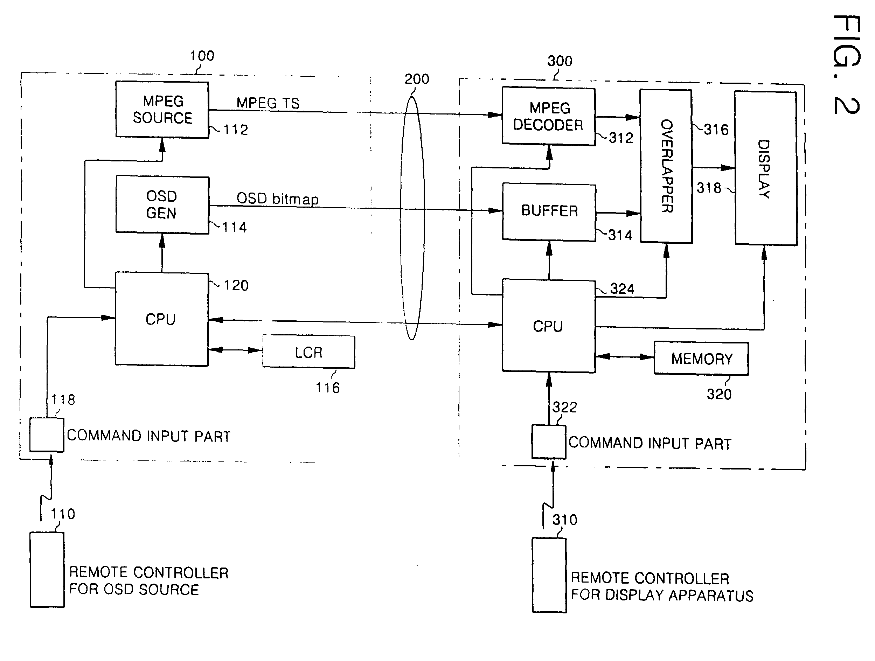

Referring to Figure 2, the set top box 100 and the DTV 300 are interconnected by a DTV 1394 bus 200.

The set top box 100 includes an MPEG source 112, an OSD generator 114, an output asynchronous plug register OAPR 116, a command input part 118 and a control part 120. The MPEG source detects an MPEG transport stream by receiving a satellite broadcast signal under the control of the control part 120 and provides the detected MPEG transport stream to the DTV 300. The OSD generator 114 generates OSD display data in bitmap format under the control of the control part 120.

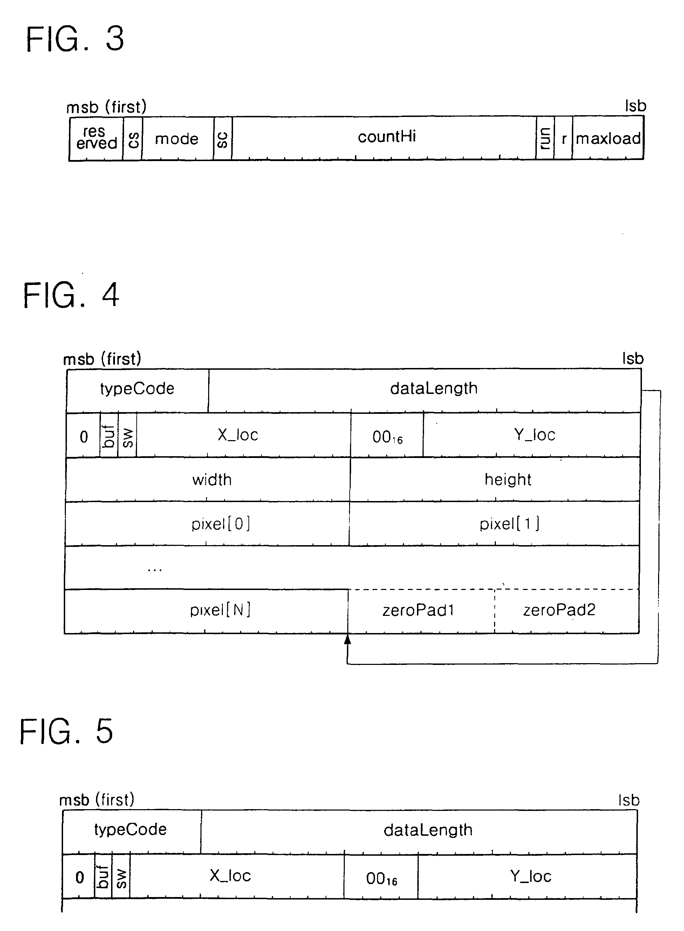

The output asynchronous plug register OAPR 120 stores four bytes of data as shown in Figure 3. The data structure of the output asynchronous plug register OAPR in Figure 3 is as shown in table 1.

**Table 1**

| CLASSIFICATION | DESCRIPTION |
|---|---|
| RESERVED | 0 |
| CS | BIT INDICATING POSSIBILITY OF CURSOR SAVE |
| MODE | 0:FREE, 1:RESERVED, 2:SUSPEND, 3:RESERVED, 4:RESUME5:SEND, 6∼7:RESERVED, |
| SC | TOGGLE BIT |
| COUNTHI | 18 BITS COUNT VALUE |
| RUN | |
| RESERVED | 0 |
| MAX LOAD | INDICATE DATA-PAYLOAD SIZE FOR ENTERING 4 BITS SEGMENT BUFFER |

According to the present invention, the output asynchronous plug register OAPR information is provided from the DTV to the STB on the initial connection of the STB 100 and the DTV 300. Then, in the case of a DTV having its own OSD object data save possibility indicating data, if the OSD object data save possibility information is provided to the STB 100, the STV sets the CS bit of cursor data save possibility indicating bit to "1".

OSD cursor data is transmitted from the STB 100 to the DTV 300. As cursor data, the OSD cursor display data in Figure 4 is transmitted first and then the OSD cursor ID data in Figure 5 is transmitted.

The DTV 300 includes an MPEG decoder 312, a buffer 314, an overlapper 316, an image display 318, a memory 320, a command input part 322 and a control part 324. The MPEG decoder 312 outputs image data to the overlapper 316 by decompressing compressed image data in a received MPEG transport stream. The buffer 314 buffers the provided OSD data and provides the corresponding OSD data to the overlapper 316 under the control of the control part 324. The overlapper 316 overlaps the image data and the OSD data and provides it to the image display 318. The memory 320 stores the OSD display data provided from the STB 100. The command input part 322 receives a command signal generated from the remote controller 310 and provides the command signal to the control part 324.

The STB 100 generates and transmits the sub frame of the OSD cursor display data in Figure 4, first by controlling the OSD generator 114 through the control part 116, in case that an OSD cursor display command is input, using the remote controller 110.

A sub frame of the OSD cursor display data in Figure 4 includes TYPECODE (1 byte), data length (3 bytes), BUF (1 byte), SW of one byte (1 byte), X co-ordinate value of the cursor display location (12 bits), Y coordinate value of cursor location (12 bits), cursor display width (2 bytes), cursor display height (2 bytes) and a plurality of 2-byte cursor pixel data.

TYPECODE of said sub frame has a value of "0XF0" for example. The cursor pixel data are bitmap data. Here, "0X" of "0XF0" indicates hexadecimal notation. Therefore, "F0" indicates 240.

In the DTV 300, the OSD cursor display data sub frame, transmitted through the bus 200, is stored in the buffer 314 temporarily.
In the control part 324, the TYPECODE of the sub frame stored in the buffer 314 is analyzed and, if the TYPECODE is "0XF0", the OSD cursor display data stored in the buffer 314 is stored in the memory 320. And, the received cursor display data is displayed at a given XY location.

After transmitting the OSD cursor display data sub frame, the STB 100 outputs OSD cursor display information by providing a control signal to the OSD generator 114. Thereafter, the OSD cursor display information only comprises cursor display location information and cursor ID information of 8 bytes as shown in Figure 5.

The cursor ID information sub frame includes TYPECODE (1 byte), data length (3 bytes), BUF (1 bit), SW (1 bit), X co-ordinate value of the cursor display location (12 bits) and Y co-ordinate value of the cursor location (12 bits). The location information for the cursor is sent with TYPECODE "0XF1" and is constituted with four bytes including X and Y location information. BUF has a value of "0" and SW has a value of "0". "00" of BUF and SW is a control code for locating cursor display data in the buffer 314 promptly in the consumer. That is, the cursor ID information has TYPECODE of different value from the cursor bitmap information.

Therefore, the DTV 300 analyzes the sub frame in Figure 5, received and placed in the buffer 314, and if the TYPECODE value is "0XF1", determines that it is new location data for the present cursor whose OSD cursor display data has already been received and stored in the memory, and after reading the cursor display data stored in the memory 320 and storing promptly said cursor display data in the buffer 314, the DTV displays the cursor display data stored in the buffer 314 at a screen location designated with given X and Y coordinate values.

Therefore, according to the present invention, the STB 100 does not send the whole OSD cursor display data in bitmap format at every cursor location movement to the DTV 300. If the whole OSD cursor display data is sent in early stages and from that on, only the cursor display location information is sent, the STB 300 reads the cursor display data received at first and displays the cursor display data at a given location on the screen. Therefore, because the amount of data reception and transmission between the STB 100 and the DTV 300 is reduced largely, the movement of the cursor on the screen can be displayed very fast, and therefore it can be viewed very naturally when a user views visually.

Because only the display location information of the cursor is to be transmitted in transmitting the OSD cursor display data between the producer and the consumer, the amount of data transmission is reduced. Therefore, because the amount of data to be processed in the consumer is reduced, it is possible to display an OSD cursor of the producer on a screen of the consumer at high speed.

## Claims

1. An apparatus (100) configured to transmit OSD cursor data to a display apparatus (300), **characterised by** being configured to send initially cursor data defining both the form of and a screen location for a cursor and thereafter send cursor data comprising location update data for said cursor without form data.

2. An apparatus according to claim 1, configured such that an id for said cursor is included in all cursor data sent for said cursor.

3. An apparatus according to claim 1 or 2, wherein said form data comprises a bit map.

4. A display apparatus (300) having an OSD function, the apparatus including means for receiving OSD cursor data from an OSD data source apparatus (100), **characterised by** memory means (320) for storing OSD cursor form data, received from an OSD data source apparatus (100), and means (324) for reading cursor form data from the memory means (320) for display in response to the reception of cursor location update data from an OSD data source apparatus (100) that has previously supplied cursor form data.

5. A consumer apparatus according to claim 4, wherein the means (324) for reading cursor form data is responsive to an id accompanying cursor location update data for selecting cursor form data in said memory means (320).

6. A consumer apparatus according to claim 4 or 5, wherein the cursor form data comprises bit maps.

7. An OSD cursor display method, comprising:
a step that an OSD source transmits OSD cursor display data to a display apparatus;
a step that said display apparatus stores the received OSD cursor display data in a memory;
a step that said OSD source transmits only cursor display location information to said display apparatus; and
a step that said display apparatus displays the cursor display data stored in said memory at the received cursor display location.

8. The OSD cursor display method according to claim 7, further comprising a step of checking whether said display apparatus is a product which can store OSD cursor display data before said OSD source transmits OSD cursor display data to the display apparatus.

9. An OSD image display apparatus, comprising:
a remocon for OSD source for generating a cursor display command on a screen;
an OSD source which transmits OSD cursor display data first in case that the cursor display command is received from said remocon for OSD source and from that on, transmits only cursor display location information; and
a display apparatus which stores the OSD cursor display data received from said OSD source in a memory, and displays the cursor display data on the screen by reading the cursor display data stored in said memory in response to the received cursor display location information.

10. The OSD image display apparatus according to claim 7, further including a register for setting display information that said OSD source is a product which can store OSD cursor display data provided from said display apparatus.
